# NEW EUROPEAN PATENT SPECIFICATION

(11) **EP 1 527 802 B2**
(45) Date of publication and mention of the opposition decision: **28.12.2011**
(45) Mention of the grant of the patent: 11.02.2009
(21) Application number: 04025941.8
(22) Date of filing: 02.11.2004
(51) Int. Cl.: A63B 71/14, A41D 19/015

(54) **Reinforcing element especially for sport gloves**
Verstärkungselement insbesondere für Sporthandschuhe
Elément de renfort en particulier pour gants de sport

(30) Priority: 30.10.2003 DE 10350448
(43) Date of publication of application: 04.05.2005
(73) Proprietor: adidas International Marketing B.V., 1062 KR Amsterdam (NL)
(72) Inventor: Knappworst, Joerg, 90522 Oberasbach (DE); Saur, Erwin Friedrich, 91126 Schwabach-Wolkersdorf (DE)
(74) Representative: Hess, Peter K. G.

(56) References cited:
- WO-A-2004/028282
- DE-A1- 3 516 545
- DE-C1- 10 100 848
- DE-U1- 29 705 586

## Description

### 1. Technical field

The present invention relates to a reinforcing element for a glove, in particular for a goalkeeper glove.

### 2. The prior art

Apart from a thermal isolation, gloves mainly serve for protecting the hand. Injuries are to be avoided by preventing or at least cushioning mechanical impacts on the hand. For example, working gloves are typically made from a stable and tear-resistant material to reduce the risk of cutting the hand.

A goalkeeper glove has several functions. Apart from improving the grip on the inner side of the hand, a primary aspect is the protection of the hand against the substantial mechanical loads which arise when deflecting a sharply shot ball. In this respect, it is known to cushion the glove for damping the forces, which occur during ball contact.

A particular risk for a goalkeeper is the hyperextension of individual fingers or the thumb. When the goalkeeper tries to deflect a ball with the extended hand, there is a risk that a single or only two fingers of the extended hand, which barely contact the ball, are subjected to the complete impact and are therefore hyperextended. Strains and - in the worst case - even fractures are the consequence. Apart from the passive cushioning already mentioned, it has therefore been known for several years to provide goalkeeper gloves and gloves for sports, wherein the hand is subjected to similar forces, for example snowboard-gloves, with active reinforcing elements. These reinforcing elements allow a bending of the hand in gripping direction. However, they block a bending of the extended hand into the opposite direction, i.e. into the direction of hyperextension. In the case of a goalkeeper glove, the extended hand and more particularly the fingers and the thumb are therefore actively supported by the glove, when deflecting a sharply shot ball.

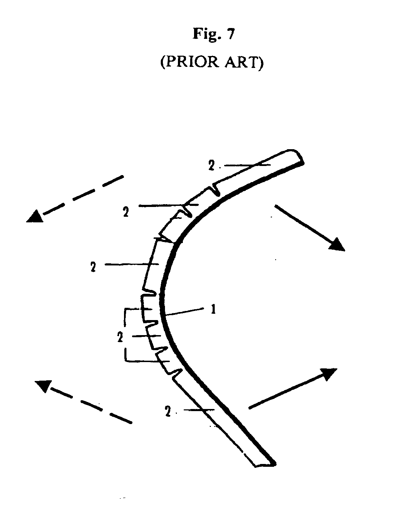

For obtaining the desired mechanical properties it is known in the prior art to design the reinforcing element from at least two separately manufactured components. An example is shown in Figure 7. A series of compression-proof bodies 2 is arranged on a completely flexible but elongation-free tension element 1 (for example a suitable foil, tape or thin wire). As can be seen, the reinforcing element can be easily folded in the direction of the continuous arrows, since an elongation-free foil, a tape or a thin wire do not resist such a deformation. However, if the reinforcing element is extended, the compression-proof bodies 2 contact each other and cooperate together with the flexible elongation-free tension element 1 so that the reinforcing element cannot exceed the extended configuration and be bent in the other direction (of the dashed arrows).

If such a reinforcing element is integrated into the backside of a glove for one or more fingers, the described cooperation of the two components provides the desired support against hyperextension. Examples for this prior art construction can be found in the DE 35 16 545 A1, the DE 199 10 799 C1, the DE 101 00 848, the WO 01/00052, the DE 100 10 403 A1, the DE 100 10 404 A1 and the DE 201 07 098 U1. All of the disclosed reinforcing elements use the described construction made from an elongation-free tension element on the one hand and a sequence of compression-proof bodies on the other hand. As explicitly stressed in the mentioned documents, only such a design allows to combine a blocking action in the direction of hyperextension with a resistance-free movement in gripping direction.

Another approach is known from the DE 201 13 431 U1. In this prior art document, the reinforcing element comprises a plurality of hingedly connected units.

The DE 201 13 431 U1 discloses links of a reinforcing element having at one end a pivot and on the other end a corresponding bearing receptacle. The hinges are designed such that a rotation of two links with respect to each other is only possible in one direction. Starting from an extended configuration the sequence of links blocks any bending of the reinforcing element into the opposite direction.

All reinforcing elements for an active protection against hyperextension known in the prior art require a complicated manufacturing process. In the constructions explained above, the compression-proof bodies 2 must be attached to the tension element 1, for example by gluing, sewing or by guiding the tension element through openings in each individual compression-proof body. This process is difficult to automize.

The same applies to the reinforcing elements made from a plurality of hingedly connected links. At first, the links must be separately manufactured and subsequently connected to each other. This leads to substantial manufacturing efforts, since up to ten reinforcing elements may be required for a complete protection of the hand.

Furthermore, the manual assembly of the reinforcing elements requires an exact quality control (for example to verify whether the compression-proof bodies 2 are reliably anchored to the tension element 1 or whether all links have been correctly connected to each other). As a consequence of the related costs, gloves with an active protection against hyperextension can until now only be found in the topmost price segment for (semi-) professional users.

This is a disadvantage, since the risk of sprains and fractures is particularly high with kids and teenagers. However, goalkeeper gloves for kids have until now not been equipped with active reinforcing elements for protection against hyperextension. One reason is that only lower prices can be charged for goalkeeper gloves for kids and teenagers. Therefore, it is not possible to incorporate an expensive reinforcing element into such gloves. In addition, the known constructions require a certain minimum size for a reliable operation.

A further glove with a protection against hyperextension is known from the DE 297 05 586 U1.

The present invention is therefore based on the problem to provide a reinforcing element for an active protection against hyperextension, which can be easier and more cost-efficiently manufactured than known constructions and which can also be used for smaller glove sizes.

### 3. Summary of the invention

This problem is solved by a reinforcing element for a glove, in particular a goalkeeper glove according to claim 1.

Applicant has realized that the prejudice in the prior art is wrong, according to which a blocking interaction in one direction and a folding into the other direction can only be achieved by a combination of at least two separately manufactured components. The invention is based on the realization that it is - in contrast to the repeated disclosure in the prior art - not a disadvantage, if the reinforcing element provides some bending resistance in gripping direction. The bending element according to the invention keeps the glove and thereby the hand in a desired initial position. In case of a goalkeeper glove, the hand is after each gripping action returned into the slightly extended base configuration of the hand. In fact, this is an advantage, when the goalkeeper has to react to a surprise shot, since the hand is from the beginning on almost extended and covers a maximal area, when the arm is lifted.

Furthermore, the use of a bending element instead of the fully flexible foils or tapes of the tension element known in the prior art allows to manufacture all blocking bodies and the bending element together as a single one-piece part. Simple manufacturing methods (for example well-known forming techniques for plastic materials) allow to provide the complete reinforcing element by a single production step. A manual assembly of each individual reinforcing element of a goalkeeper glove is no longer necessary. Thus, the manufacturing costs are reduced to such an extent that an active protection against hyperextension can even be integrated into simpler and smaller glove models.

The bending element and the blocking bodies can preferably be manufactured by injection molding a single material in a single mold. An injection molded reinforcing element can be produced in large numbers at low costs. In contrast to a subsequent manual assembly of several components injection molding leads only to minor variations during production, so that there is no need for an extensive quality control. Further, the size and the shape of the bending element can be easily varied by using different injection molding tools, for example for a cost-efficient manufacture of reinforcing elements for different glove sizes. Also the manufacture of particularly small reinforcing elements is easily possible.

The blocking bodies are arranged on the bending element such that they remain without deformation, when the reinforcing element is bent into the first direction. To this end, each blocking body is only by a ridge connected to the bending element. Therefore, when the one-piece part comprising the blocking body and the bending element is folded into gripping direction, it is essentially only the resistance of the bending element which has to be surmounted. As a result, distinct unidirectional mechanical properties of the reinforcing element are achieved in spite of its one-piece design allowing a bending into a first direction and providing a blocking effect into another direction.

In a preferred embodiment, a cut-out is arranged on the side of each ridge. This cut-out effectively decouples the blocking body from the bending of the bending element. The size and the shape of the cut-out allows to influence the bending properties of the reinforcing element.

Preferably, the reinforcing element comprises a further bending element, wherein each blocking body is connected by a first ridge to the first bending element and by a second ridge to the further bending element. Preferably, the further bending element extends in parallel to the first bending element. As a result, the two bending elements define an elastic frame in which the blocking bodies are suspended.

In a presently preferred embodiment at least some of the plurality of blocking bodies have a greater thickness at their adjacent front surfaces than in their centers. This leads to an earlier blocking interaction of the blocking bodies in case of a backward bending of the reinforcing element.

Further improvements are the subject matter of further dependent claims.

According to a further aspect, the present invention relates to a glove, in particular a goalkeeper glove, comprising any of the above described reinforcing elements.

### 4. Short description of the drawings

In the following detailed description a presently preferred embodiment of the invention is described with reference to the drawings. The drawings comprise the following figures:
- Fig. 1:: A perspective overall view of a preferred embodiment of the reinforcing element according to the invention;
- Fig. 2:: A side view of the embodiment of Fig. 1;
- Fig. 3:: A top view of the embodiment of Fig. 1;
- Fig. 4:: A section along the line I - I in Fig. 3;
- Fig. 5:: A bottom view of the embodiment of Fig. 1;
- Fig. 6a:: Schematic representation of the blocking angle α in a first embodiment;
- Fig. 6b:: Schematic representation of the reduced blocking angle α' in a further embodiment; and
- Fig. 7:: A reinforcing element according to the prior art.

### 5. Detailed description of a preferred embodiment

In the following, a presently preferred embodiment of the invention is described with reference to a reinforcing element for a goalkeeper glove. However, it is to be understood that the present invention can also be used as a reinforcing element for other types of gloves, for example in gloves for snow-boarding or in working gloves for activities with a risk of hyperextension of single fingers, the thumb or the overall hand. Finally, it is also conceivable to use reinforcing elements according to the invention for the protection of other parts of the body, for example as an active support element in the shaft of a shoe.

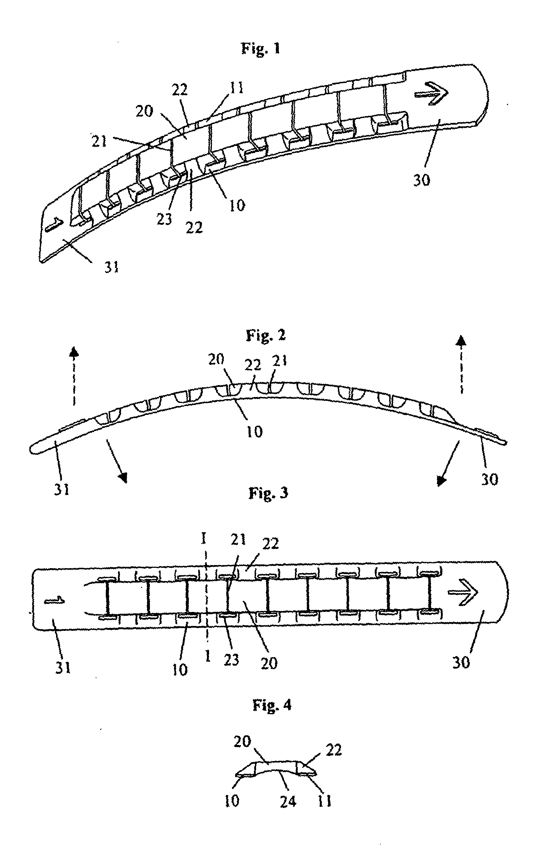

Figure 1 shows a perspective overall view of the preferred embodiment. The reinforcing element is made as a one-piece part, the sides of which are limited by two substantially parallel, bending-elastic strips 10, 11, which extend essentially parallel to the longitudinal axis of the reinforcing element. A plurality of blocking bodies 20 is arranged between the two strips 10, 11, wherein a thin slit 21 is provided between every two blocking bodies 20. The shown embodiment comprises 8 blocking bodies. However, this number may vary, in particular if the reinforcing element has a different length.

Each blocking body 20 is connected to the strip 10 and the strip 11 via a lateral ridge 22. Cut-outs 23 are arranged on the two sides of the ridge 22. Although not shown in the figures, a modified embodiment is conceivable, wherein a sequence of blocking bodies is arranged above or on the side of a single bending strip and wherein the blocking bodies are each connected by a separate ridge to the strip.

In the preferred embodiment, the connection of each blocking body 20 to the two strips 10, 11 is restricted to the dimensions of the ridges 22. As a consequence, the blocking bodies 20 are not significantly bent under a bending of the strips 10, 11 in the direction of the continuous arrows. The resistance of the reinforcing element against such a bending is therefore determined only by the dimensions and the material of the strips 10, 11 on the sides. The thinner the ridges 22, the greater is the decoupling. In the presently preferred embodiment, each ridge occupies approximately one third of the side surface of a blocking body 20 and is arranged in its centre. However, other arrangements and sizes are possible. On their top sides, the ridges 22 are inclined to the side (cf. Figure 4), so that the reinforcing element has a profile, which can be easily integrated into the backside of the glove behind a finger. Projecting lateral edges, which could cause a risk for injuries, are therefore avoided.

If the reinforcing element shown in the figures is brought into an extended configuration by bending it along the dashed arrows in Fig. 2, the blocking bodies 20 contact each other with their adjacent front sides and block any further bending in this direction. The blocking bodies 20 may be shaped in a manner that a blocking contact is obtained already before the extended position is reached.

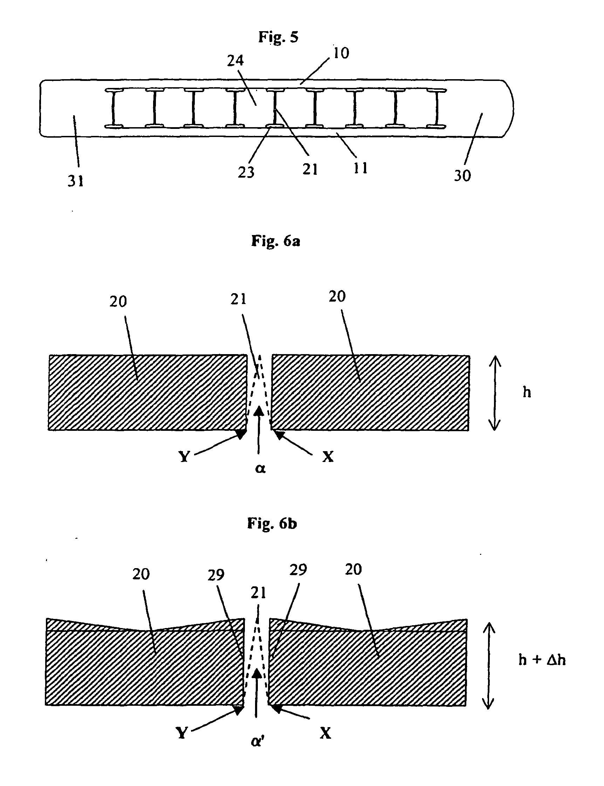

The comparison of the enlarged views of two adjacent blocking bodies 20 in Figs. 6a and 6b shows schematically, how their blocking interaction can be further adjusted. It is to be noted that Figs. 6a and 6b are not to scale and only serve to illustrate one possible adjustment principle. The blocking angle α determines, when the blocking bodies 20 start to resist any further backwards bending of the finger. If α = 0° the blocking interaction starts exactly in the extended orientation of the reinforcing element. If α > 0° the blocking interaction starts in a slightly hyperextended orientation.

For manufacturing reasons it may be preferred to have a slit 21 of a certain thickness (the fixed distance between the points X and Y in Figs. 6a, 6b), which leads inevitably to an angle α > 0° (cf. Fig. 6a). However, if the height h of the contacting front sides 29 of the blocking bodies 20 is increased by an amount Δh, as shown in Fig. 6b, the value of the blocking angle is reduced (α' < α), so that an earlier blocking action is achieved with the same width of the slit 21. The greater height h + Δh of the contacting front surfaces 29 can for example be achieved by providing the blocking bodies 20 with a linearly increasing thickness in the direction of the front surface 29, as shown in the cross-section of Fig. 6b. The advantage of this shape is that the overall thickness of the reinforcing element is only locally increased so that a glove with such a reinforcing element does not become too bulky. However, other shapes are also conceivable, for example concavely shaped top sides of the blocking bodies 20.

Another option for achieving an earlier blocking action, even before the reinforcing element is in the extended configuration, is to provide adjacent blocking bodies 20 with front surfaces 29, which are not parallel, but slightly inclined with respect to each other (not shown).

If the reinforcing element described above is integrated into a glove so that the bending direction of the continuous arrows in Fig. 2 corresponds to the natural gripping direction of the hand, a protection against hyperextension of single fingers, the thumb or - depending on the arrangement and the size of the reinforcing element - for the wrist is achieved. For a better adaptation to the backside of a finger or of the thumb the lower sides 24 of the blocking bodies 20 are preferably concave, as shown in the cross-section of Figure 4.

Apart from the dimensions of the ridges 22, also the size of the cut-outs 23 on the sides determine the bending properties and the resistance of the reinforcing element against hyperextension. The wider the cut-outs 23, the smaller are the lateral bending strips 10, 11 or the central blocking bodies 20, if the overall width of the reinforcing element is kept constant. In the first case, it is primarily the bending resistance in gripping direction, which is reduced, whereas thinner blocking bodies 20 lead to a reduced stability in the direction of hyperextension.

At the front end, the last blocking body 20 forms an insertion area 30, which is flattened and rounded on its side to facilitate the insertion into a receptacle, such as a pocket on the backside of a glove (not shown). In the same manner, the last blocking body 20 at the rear end forms a flat region 31, which facilitates the holding of the reinforcing element for insertion into the backside of a glove. Furthermore, the flat end section 31 serves to transmit the forces caused by the support of a finger into the backside of the hand. The insertion area 30 as well as the flat end section 31 can further be used to receive assembly instructions, for example the direction of insertion and the number of a reinforcing element, which is to be arranged in a certain position in the glove. This is schematically indicated in Figures 1 and 3 with the arrow and the number "1". Furthermore, the user can adjust the support properties of the glove by exchanging individual reinforcing elements or by arranging reinforcing elements only behind some of the fingers.

All these adaptations are facilitated by information about an individual reinforcing element, which can be provided on the flat end section 31.

The described reinforcing element is manufactured as a continuous one-piece component. Preferred are thermoplastic materials, which can be cost-efficiently and precisely processed by injection molding. Conceivable are also other techniques for forming plastic materials, such a deep drawing, vacuum forming or techniques, which facilitate the manufacture of highly individualized reinforcing elements such as 3D-printing or stereolithography. In any case, there is no need for a manual assembly of the strips 10, 11 and the blocking bodies 20.

Examples of preferred plastic materials are polypropylene (PP) for reinforcing elements, which are only subjected to limited loads (for example for goalkeeper gloves of kids and teens) and polyoximethylene (POM) for goalkeeper gloves subjected to high loads. In this context it is conceivable to arrange different reinforcing elements behind different fingers of the hand within the glove, for example to provide a greater protection for the small finger against hyperextension or to obtain a particularly low resistance in gripping direction (continuous arrows in Fig. 2) for weaker fingers. This can for example be achieved by using a different material or by variations of the thickness of the strips 10, 11 and the ridges 22 and/or the cut-outs 23 . The injection molding of the reinforcing element as a single piece facilitates in any case adaptations of the size and/or modifications of the construction. In contrast to the prior art, where any modification of the reinforcing element requires new instructions to the production personnel to ensure a sufficient quality of the manually assembled components, the preferred embodiment of the invention requires only an adaptation of the injection molding tool.

The tool for injection molding defines apart from the already discussed details of the reinforcing element also its initial curvature (cf. the side view in fig. 2) in the absence of any external force. This initial curvature corresponds preferably to the natural shape of the hand (and more particularly the respective fingers) in the relaxed state. The closing of the hand, for example for catching a ball, leads to a bending of the strips 10, 11 and thereby to an elastic restoring force, which brings the hand back into its natural initial configuration. The reinforcing element therefore actively supports the actual course of movements of the hand. Furthermore, the only slight curvature in the natural initial configuration of the hand is advantageous when the goalkeeper throws up his arms to deflect a surprise shot, since the hand is already in an almost extended configuration and provides therefore the greatest range for the goalkeeper to deflect the ball.

As a result, the reinforcing element of the present invention combines a substantially facilitated manufacture with improved functional properties.

## Claims

1. Reinforcing element for a glove, in particular a goalkeeper glove, comprising:
a. at least one bending element (10);
b. a plurality of blocking bodies (20);
c. wherein the blocking bodies (20) are arranged at the bending element (10) in such a manner that the reinforcing element is bendable into a first direction and that a bending into a second direction is blocked by a blocking contact of the blocking bodies (20);
d. wherein the bending element (10) and the blocking bodies (20) are formed together as a part made as a single piece; and
e. wherein the blocking bodies (20) are arranged at the bending element in such a manner that they remain substantially without deformation under a bending of the reinforcing element into the first direction and wherein each blocking body (20) is connected to the bending element (10) only by a ridge (22).

2. Reinforcing element according to claim 1, wherein the bending element (10) and the blocking bodies (20) are manufacturable by injection molding of a single material in a single mold.

3. Reinforcing element according to claim 1 or 2, wherein at least one cut-out (23) is arranged on the side of each ridge (22).

4. Reinforcing element according to claim 1 - 3, further comprising a further bending element (11), wherein each blocking body (20) is connected by a first ridge (22) to the first bending element (10), and by a second ridge (22) to the further bending element (11).

5. Reinforcing element according to claim 4, wherein the further bending element (11) extends in parallel to the first bending element (10).

6. Reinforcing element according to claim 5, wherein the bending elements (10, 11) are curved in their initial shape, so as to conform to the natural shape of the fingers and / or the hand.

7. Reinforcing element according to claim 6, wherein the bending of the bending elements (10, 11) into the first direction provides a restoring force.

8. Reinforcing element according to any of the claims 1 - 7, wherein at least some of the plurality of blocking bodies (20) have a greater thickness at their adjacent front surfaces (29) than in their centers.

9. Reinforcing element according to claim 8, wherein the thickness increases linearly from the center to the front surfaces (29).

10. Reinforcing element according to one of the claims 1 - 9, wherein the at least one bending element (10) extends essentially parallel to the longitudinal axis of the reinforcing element.

11. Glove comprising a reinforcing element according to any of the claims 1 to 10.

## Patentansprüche

1. Verstärkungselement für einen Handschuh, insbesondere einen Torwarthandschuh, aufweisend:
a. zumindest ein Biegeelement (10);
b. eine Mehrzahl von Sperrkörpern (20);
c. wobei die Sperrkörper (20) an dem Biegeelement (10) so angeordnet sind, dass das Verstärkungselement in eine erste Richtung biegbar ist und dass eine Biegung in eine zweite Richtung durch ein blockierendes Aneinanderstoßen der Sperrkörper (20) verhindert wird;
d. wobei das Biegeelement (10) und die Sperrkörper (20) gemeinsam als ein einteilig gefertigtes Bauteil ausgebildet sind; und
e. wobei die Sperrkörper (20) in dem Biegeelement so angeordnet sind, dass sie unter einer Biegung des Verstärkungselements in die erste Richtung im Wesentlichen ohne Verformung bleiben und wobei jeder Sperrkörper (20) mit dem Biegeelement (10) nur über einen Steg (22) verbunden ist.

2. Verstärkungselement nach Anspruch 1, wobei das Biegeelement (10) und die Sperrkörper (20) durch gemeinsames Spritzgießen eines Materials in eine einzige Form herstellbar sind.

3. Verstärkungselement nach Anspruch 1 oder 2, wobei zumindest eine Aussparung (23) an der Seite von jedem Steg (22) angeordnet ist.

4. Verstärkungselement nach einem der Ansprüche 1-3, ferner aufweisend ein weiteres Biegeelement (11), wobei jeder Sperrkörper (20) über einen ersten Steg (22) mit dem ersten Biegeelement (10) und über einen zweiten Steg (22) mit dem weiteren Biegeelement (11) verbunden ist.

5. Verstärkungselement nach Anspruch 4, wobei sich das weitere Biegeelement (11) parallel zum ersten Biegeelement (10) erstreckt.

6. Verstärkungselement nach Anspruch 5, wobei die Biegeelemente (10, 11) in ihrer Ausgangsform gebogen sind, um der natürlichen Form der Finger und/oder der Hand zu entsprechen.

7. Verstärkungselement nach Anspruch 6, wobei die Biegung der Biegeelemente (10,11) in die erste Richtung eine Rückstellkraft verursacht.

8. Verstärkungselement nach einem der Ansprüche 1-7, wobei zumindest einige der Mehrzahl von Sperrkörpern (20) eine größere Dicke an den benachbarten Stirnseiten (29) aufweisen als in ihren Mitten.

9. Verstärkungselement nach Anspruch 8, wobei die Dicke linear von der Mitte zu den Stirnseiten (29) zunimmt.

10. Verstärkungselement nach einem der Ansprüche 1-9, wobei sich zumindest ein Biegeelement (10) im Wesentliche parallel zu der Längsachse des Verstärkungselements erstreckt.

11. Handschuh, aufweisend ein Verstärkungselement nach einem der Ansprüche 1-10.

## Revendications

1. Élément de renfort pour un gant, en particulier un gant de gardien de but, comprenant :
a. au moins un élément de courbure (10) ;
b. une pluralité de corps de blocage (20) ;
c. dans lequel les corps de blocage (20) sont disposés à l'endroit de l'élément de courbure (10) d'une manière telle que l'élément de renfort soit courbable dans un premier sens et qu'une courbure dans un second sens soit bloquée par un contact bloquant des corps de blocage (20) ; ;
d. dans lequel l'élément de courbure (10) et les corps de blocage (20) sont formés ensemble en une pièce réalisée monobloc ; et
e. dans lequel les corps de blocage (20) sont disposés à l'endroit de l'élément de courbure d'une manière telle qu'ils restent substantiellement sans déformation sous une courbure de l'élément de renfort dans le premier sens et dans lequel chaque corps de blocage (20) est relié à l'élément de courbure (10) seulement par une nervure (22).

2. Élément de renfort selon la revendication 1, dans lequel l'élément de courbure (10) et les corps de blocage (20) peuvent être fabriqués par moulage par injection d'un unique matériau dans un unique moule.

3. Élément de renfort selon la revendication 1 ou 2, dans lequel au moins un évidement (23) se trouve sur le côté de chaque nervure (22).

4. Élément de renfort selon la revendication 1-3, comprenant en outre un autre élément de courbure (11), dans lequel chaque corps de blocage (20) est relié par une première nervure (22) au premier élément de courbure (10), et par une seconde nervure (22) à l'autre élément de courbure (11).

5. Élément de renfort selon la revendication 4, dans lequel l'autre élément de courbure (11) s'étend en parallèle au premier élément de courbure (10).

6. Élément de renfort selon la revendication 5, dans lequel les éléments de courbure (10, 11) sont courbés dans leur forme initiale, de manière à se conformer à la forme naturelle des doigts et/ou de la main.

7. Élément de renfort selon la revendication 6, dans lequel la courbure des éléments de courbure (10, 11) dans le premier sens procure une force de rappel.

8. Élément de renfort selon l'une des revendications 1-7, dans lequel au moins certains de la pluralité de corps de blocage (20) possèdent une épaisseur supérieure à leurs surfaces frontales adjacentes (29) qu'à leurs centres.

9. Élément de renfort selon la revendication 8, dans lequel l'épaisseur augmente linéairement depuis le centre vers les surfaces frontales (29).

10. Élément de renfort selon l'une des revendications 1-9, dans lequel le au moins un élément de courbure (10) s'étend essentiellement parallèle à l'axe longitudinal de l'élément de renfort.

11. Gant comprenant un élément de renfort selon l'une des revendications 1 à 10.
